(19) Europäisches Patentamt
European Patent Office
Office européen des brevets

(11) EP 1 800 749 B1

(12) FASCICULE DE BREVET EUROPEEN

(45) Date de publication et mention de la délivrance du brevet:
**15.05.2013 Bulletin 2013/20**

(21) Numéro de dépôt: **06291972.5**

(22) Date de dépôt: **14.12.2006**

(51) Int Cl.:
***B01J 37/20*** (2006.01)
***B01J 23/00*** (2006.01)
***C10G 49/04*** (2006.01)
***B01J 35/00*** (2006.01)
***C10G 45/32*** (2006.01)

# (54) Procédé d'hydrogénation sélective mettant en oeuvre un catalyseur présentant un support spécifique

Trägerkatalysator zur selektiven Hydrierung

Method of selective hydrogenation using a catalyst with a specific support

(84) Etats contractants désignés:
**DE FR GB IT NL**

(30) Priorité: **22.12.2005 FR 0513173**

(43) Date de publication de la demande:
**27.06.2007 Bulletin 2007/26**

(73) Titulaire: **Institut Français du Pétrole**
**92852 Rueil-Malmaison Cedex (FR)**

(72) Inventeurs:
- **Bouchy, Christophe**
**69007 Lyon (FR)**
- **Picard, Florent**
**69360 Communay (FR)**
- **Marchal, Nathalie**
**69230 Saint Genis Laval (FR)**

(56) Documents cités:
**EP-A- 1 447 436**
**BE-A- 676 321**
**GB-A- 1 379 202**
**GB-A- 1 415 417**

- **WANG X ET AL: "Effect of pre-treatment conditions on the performance of sulfided Ni-Mo/gamma-Al2O3 catalysts for hydrogenation of linear aldehydes", JOURNAL OF MOLECULAR CATALYSIS. A, CHEMICAL, ELSEVIER, AMSTERDAM, NL, vol. 232, no. 1-2, 3 mai 2005 (2005-05-03) , pages 101-112, XP004798755, ISSN: 1381-1169**
- **SUN M ET AL: "Theoretical investigations of the structures and properties of molybdenum-based sulfide catalysts", APPLIED CATALYSIS A: GENERAL, ELSEVIER SCIENCE, AMSTERDAM, NL, vol. 263, no. 2, 10 juin 2004 (2004-06-10) , pages 131-143, XP004506881, ISSN: 0926-860X**
- **TOBA M ET AL: "Selective hydrodesulfurization of FCC gasoline over CoMo/Al2O3 sulfide catalyst", CATALYSIS TODAY, ELSEVIER, vol. 104, no. 1, 15 juin 2005 (2005-06-15) , pages 64-69, XP004922067, ISSN: 0920-5861**
- **SONJA EIJSBOUTS: "REVIEW: ON THE FLEXIBILITY OF THE ACTIVE PHASE IN HYDROTREATING CATALYST", APPLIED CATALYSIS A: GENERAL, vol. 158, 1997, pages 53-92, XP002402483, Amsterdam (NL)**

Il est rappelé que: Dans un délai de neuf mois à compter de la publication de la mention de la délivrance du brevet européen au Bulletin européen des brevets, toute personne peut faire opposition à ce brevet auprès de l'Office européen des brevets, conformément au règlement d'exécution. L'opposition n'est réputée formée qu'après le paiement de la taxe d'opposition. (Art. 99(1) Convention sur le brevet européen).

EP 1 800 749 B1

## Description

### DOMAINE DE L'INVENTION

La production d'essences répondant aux nouvelles normes d'environnement nécessite que l'on diminue de façon importante leur teneur en soufre à des valeurs n'excédant généralement pas 50 ppm, et préférentiellement inférieures à 10 ppm.
Il est par ailleurs connu que les essences de conversion, et plus particulièrement celles provenant du craquage catalytique, qui peuvent représenter 30 à 50 % du pool essence, présentent des teneurs en oléfines et en soufre élevées.
Le soufre présent dans les essences est pour cette raison imputable, à près de 90 %, aux essences issues des procédés de craquage catalytique, qu'on appellera dans la suite essence de FCC (que l'on peut traduire par craquage catalytique en lit fluidisé). Les essences de FCC constituent donc la charge préférée du procédé de la présente invention.
Plus généralement, le procédé selon l'invention est applicable à toute coupe essence contenant une certaine proportion de dioléfines, et pouvant contenir en outre quelques composés plus légers appartenant aux coupes C3 et C4.

Les essences issues d'unités de craquage sont généralement riches en oléfines et en soufre, mais également en dioléfines dont la teneur, pour les essences issues de craquage catalytique peut varier de 1% poids à 5 % poids. Les dioléfines sont des composés instables qui peuvent polymériser facilement et doivent généralement être éliminées avant tout traitement de ces essences tels que les traitements d'hydrodésulfuration destinés à répondre aux spécifications sur les teneurs en soufre dans les essences. Toutefois, cette hydrogénation doit être sélective aux dioléfines et limiter l'hydrogénation des oléfines afin de limiter la consommation d'hydrogène ainsi que la perte d'octane de l'essence. Par ailleurs, comme cela a été décrit dans la demande de brevet EP01077247 A1, il est avantageux de transformer par alourdissement les composés soufrés légers saturés qui sont les composés soufrés dont le point d'ébullition est inférieur au point d'ébullition du thiophène, tels que le méthanethiol, l'éthanethiol, le diméthylsulfure avant l'étape de désulfuration car cela permet de produire une fraction essence désulfurée composée majoritairement d'oléfines à 5 atomes de carbone sans perte d'octane par simple distillation. La quantité de soufre présente dans la charge après l'hydrogénation sélective et l'alourdissement des composés soufrés légers n'est pas modifiée, seule la nature du soufre l'est par alourdissement des composés soufrés légers.

De plus, les composés diéniques présents dans la charge à traiter sont instables et ont tendance à former des gommes par polymérisation. Cette formation de gommes entraîne une désactivation progressive du catalyseur d'hydrogénation sélective ou un bouchage progressif du réacteur. Pour une application industrielle, il est donc important d'utiliser des catalyseurs qui limitent la formation de polymères, c'est à dire des catalyseurs présentant une faible acidité ou bien dont la porosité est optimisée pour faciliter l'extraction continue des polymères ou précurseurs de gommes par les hydrocarbures de la charge, afin d'assurer une durée de cycle maximale pour le catalyseur.
La présente invention propose l'utilisation d'un nouveau catalyseur dans un procédé permettant de réaliser conjointement l'hydrogénation des composés polyinsaturés et plus particulièrement des dioléfines, ainsi que l'alourdissement des composés soufrés légers et plus particulièrement des mercaptans.
Un des avantages de l'invention est de faciliter l'élimination du soufre par alourdissement des mercaptans de manière à pouvoir les séparer plus facilement et donc les éliminer dans une étape ultérieure d'hydrodésulfuration.
Un autre avantage de l'invention est d'obtenir une essence présentant un indice d'octane élevé.
Un troisième avantage de l'invention réside dans le fait que la formulation du catalyseur est ajustée afin d'assurer une meilleure stabilité du catalyseur vis à vis de la formation de polymères, une bonne sélectivité vis à vis de l'hydrogénation des dioléfines et une bonne activité pour la conversion des mercaptans et autres composés soufrés légers.

### ETAT DE LA TECHNIQUE

La littérature décrit des formulations catalytiques ou des procédés permettant, soit d'hydrogéner sélectivement les dioléfines en mono-oléfines, soit de transformer les mercaptans par alourdissement, soit de réaliser ces deux types de réactions, en une ou deux étapes.

Il est connu d'utiliser des catalyseurs contenant au moins un métal noble. Ainsi, de nombreux brevets proposent des catalyseurs pour l'hydrogénation sélective contenant du palladium. En effet, le palladium est connu pour son activité hydrogénante et est largement utilisé dans les procédés d'hydrogénation sélective. Toutefois, le palladium est sensible aux poisons et notamment à la présence de soufre. La présente invention se différentie notamment de ces catalyseurs par le fait que le catalyseur selon l'invention ne contient pas de palladium, et plus largement, ne contient pas de métaux nobles.
La demande de brevet européen EP 0685552 A1 propose un procédé d'hydrogénation des dioléfines et de réduction de la teneur en mercaptans contenus dans une essence de craquage catalytique basé sur un catalyseur contenant entre 0,1 et 1 % poids de palladium.

La demande de brevet européen EP 0623387 A1 propose un catalyseur comprenant au moins un métal du

groupe VIII choisi de manière préférée parmi le platine, le palladium et le nickel et au moins un métal additionnel M choisi de manière préférée dans le groupe formé par le germanium, l'étain, le plomb, le titane, le fer, le molybdène, le tungstène et le rhénium. Le catalyseur est caractérisé par le fait que le métal du groupe VIII est activé par réduction dans le réacteur avant introduction du métal M. Le catalyseur de la présente invention se différentie de ce brevet car il ne subit pas d'étape de réduction lors de la phase de préparation.

Les brevets et demandes de brevets suivants proposent des solutions pour hydrogéner sélectivement les dioléfines, les réactions affectant éventuellement les composés soufrés si ils sont présents ne sont pas mentionnés.

Le brevet US 6469223 concerne un procédé d'hydrogénation sélective de dioléfines sur un catalyseur contenant du nickel et du molybdène sur un support à base d'alumine. Le procédé est caractérisé par le fait que les métaux nickel et molybdène sont mis en oeuvre sous forme d'oxydes. La présente invention se différentie de cet art antérieur en ce que les métaux sont mis en oeuvre sous forme de sulfures métalliques et non d'oxydes.

Le brevet US 3472763 propose un procédé d'hydrogénation sélective comprenant un catalyseur à base de nickel supporté sur alumine. Le catalyseur peut également contenir de manière préférée entre 1 % et 10% de molybdène. Ce catalyseur est par ailleurs caractérisé par une répartition poreuse telle que le volume poreux total est supérieur à 0,4 $cm^3/g$, avec 40% à 80% de ce volume correspondant à des pores dont le diamètre est supérieur à 0,05 et dont les pores qui ont un diamètre compris entre 0,05 et 1 micron représente plus de 20% du volume poreux. Ce brevet enseigne par ailleurs qu'il est préférable de réduire les métaux avant leur sulfuration partielle. Le catalyseur de la présente invention se différentie de cet art antérieur notamment par la teneur en molybdène qui est supérieure à 10% poids, et par l'étape de sulfuration qui est réalisée sur les métaux à l'état d'oxydes.

Les brevets et demandes de brevets suivants proposent des solutions pour alourdir les mercaptans par des réactions de thioéthérification et éventuellement hydrogéner sélectivement les dioléfines.

Le brevet US 5807477 propose un procédé permettant, dans une première étape, de transformer les mercaptans en sulfures par addition sur les dioléfines, sur un catalyseur comprenant un métal du groupe VIII de préférence du nickel sous forme d'oxyde, puis dans une seconde étape, d'hydrogéner sélectivement les dioléfines dans une colonne de distillation réactive en présence d'hydrogène. La présente invention se différentie de ce brevet car les étapes d'hydrogénation sélective et d'alourdissement des composés soufrés sont réalisées conjointement sur le même catalyseur, mis en oeuvre sous forme sulfurée.

Le brevet US 5851383 décrit un procédé d'hydrogénation sélective et de thioéthérification de coupes C3-C5 caractérisé par un dispositif de distillation comprenant deux zones de fractionnement permettant de récupérer séparément les composés légers et les thioéthers. Les catalyseurs décrits sont soit des catalyseurs à base de métal du groupe VIII, soit des résines contenant un métal. Un catalyseur contenant entre 15% et 35% de nickel est préféré. Le catalyseur de la présente invention se différentie de ce brevet car le métal d'hydrogénation est un métal du groupe VIb, et la teneur en nickel est inférieure à 15% poids.

GB 1 415 417 décrit un procédé d'hydrogantion d'une coupe essence mettant en oeuvre un catalyseur CoMo.

Au vu des solutions décrites dans la littérature, la présente invention propose un procédé mettant en oeuvre un catalyseur présentant un support spécifique, permettant de réaliser conjointement l'hydrogénation des composés polyinsaturés et plus particulièrement des dioléfines, ainsi que l'alourdissement des composés soufrés légers et plus particulièrement des mercaptans.

<u>DESCRIPTION SOMMAIRE DE L'INVENTION</u>

La présente invention décrit un procédé d'hydrogénation sélective des composés polyinsaturés et plus particulièrement des dioléfines permettant de réaliser conjointement l'alourdissement des composés soufrés légers saturés et plus particulièrement des mercaptans, ledit procédé mettant en oeuvre un catalyseur contenant au moins un métal du groupe VIb et au moins un métal non noble du groupe VIII déposés sur un support comprenant un aluminate de métal de type $MAl_2O_4$ dans lequel le métal M est sélectionné dans le groupe constitué par le Nickel et le Cobalt et tel que la quantité de métal M en interaction forte avec le support est comprise entre 0,5 et 10% poids d'oxyde de métal par rapport au poids total du catalyseur, et dans lequel

- la teneur en poids d'oxyde de l'élément du groupe VIb est strictement supérieure à 12% poids par rapport au poids total du catalyseur,
- la teneur en poids d'oxyde de l'élément du groupe VIII est inférieure à 15% poids par rapport au poids total du catalyseur,
- le taux de sulfuration des métaux constituants ledit catalyseur est au moins égal à 60%,
- le volume des pores dont le diamètre est supérieur à 0,05 microns est compris entre 10 et 40% du volume poreux total.
- le rapport molaire entre le métal non-noble du groupe VIII et le métal du groupe VIb étant compris entre 0,2 et 0,5 mol/mol.

Le procédé consiste à faire passer sur le catalyseur un mélange constitué de l'essence à traiter et d'hydrogène.

L'hydrogène est introduit généralement en faible excès, jusqu'à 5 mole par mole, par rapport à la stoechiométrie nécessaire pour hydrogéner les dioléfines (une mole d'hydrogène par mole de dioléfine).

Le mélange constitué de l'essence et de l'hydrogène est mis en contact avec le catalyseur sous une pression comprise entre 0,5 et 5 MPa, une température comprise entre 80°C et 220°C, avec une vitesse spatiale liquide (LHSV) comprise entre 1$h^{-1}$ et 10 $h^{-1}$, la vitesse spatiale liquide étant exprimée en litre de charge par litre de catalyseur par heure, soit des $h^{-1}$.

DESCRIPTION DETAILLEE DE L'INVENTION

L'invention concerne un procédé de traitement d'essences comprenant tout type de familles chimiques et notamment des dioléfines, des oléfines, et des composés soufrés sous forme de mercaptans et de sulfures. La présente invention trouve particulièrement son application dans la transformation des essences de conversion, et en particulier des essences en provenance du craquage catalytique, du craquage catalytique en lit fluide (FCC), d'un procédé de cokéfaction, d'un procédé de viscoréduction, ou d'un procédé de pyrolyse. Les charges pour lesquelles s'applique l'invention ont une température d'ébullition comprise entre 0°C et 280°C, et plus précisément entre 30°C et 250°C. Les charges peuvent également contenir des hydrocarbures à 3 ou 4 atomes de carbone.

Par exemple, les essences issues d'unités de craquage catalytique (FCC) contiennent, en moyenne, entre 0,5 % et 5 % poids de dioléfines, entre 20 % et 50% poids d'oléfines, entre 10 ppm et 0,5 % poids de soufre dont généralement moins de 300 ppm de mercaptans. Les mercaptans se concentrent généralement dans les fractions légères de l'essence et plus précisément dans la fraction dont la température d'ébullition est inférieure à 120°C.

Le traitement de l'essence décrit dans le présent procédé consiste principalement à :

- hydrogéner sélectivement les dioléfines en oléfines
- transformer les composés soufrés légers saturés et principalement les mercaptans, en sulfures ou mercaptans plus lourds par réaction avec les oléfines

Les réactions d'hydrogénation des dioléfines en oléfines sont illustrées ci-dessous par la transformation du 1,3 pentadiène qui est un composé instable qui peut facilement polymériser en pent-2-ène par réaction d'addition d'hydrogène. Toutefois, on cherche à limiter les réactions secondaires d'hydrogénation des oléfines qui dans l'exemple ci-dessous conduiraient à la formation de n-pentane.

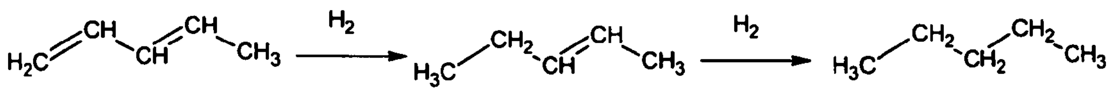


Les composés soufrés que l'on cherche à transformer sont principalement les mercaptans et les sulfures. La réaction principale de transformation des mercaptans consiste en une thioéthérification des oléfines par les mercaptans. Cette réaction est illustrée ci-dessous par l'addition du propane-2-thiol sur le pent-2-ène pour former un propyl pentyl sulfure.

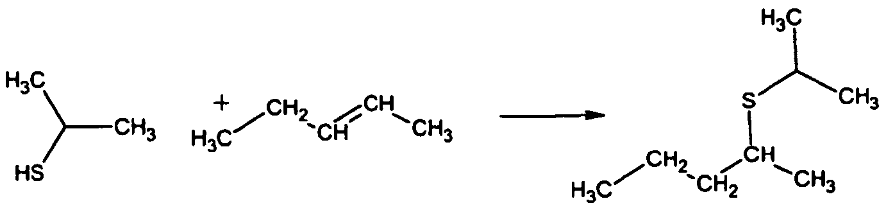

En présence d'hydrogène, la transformation des composés soufrés peut également passer par la formation intermédiaire d'$H_2S$ qui peut ensuite s'additionner sur les composés insaturés présents dans la charge. Cette voie est toutefois minoritaire dans les conditions de la réaction préférées.

Outre les mercaptans, les composés susceptibles d'être ainsi transformés et alourdis sont les sulfures et principalement le diméthyl sulfure, méthyl éthyl sulfure et diéthyl sulfure, le $CS_2$, le COS, le thiophane, le méthyl thiophane.

Dans certains cas, on peut également observer des réactions d'alourdissement des composés azotés légers, et principalement des nitriles, du pyrrole et de ses dérivés.

Le procédé décrit dans la présente invention consiste à mettre en contact la charge à traiter en mélange avec

un flux d'hydrogène, avec un catalyseur contenant au moins un métal du groupe VIb (groupe 6 selon la nouvelle notation de la classification périodique des éléments : Handbook of Chemistry and Physics, 76ième édition, 1995-1996) et au moins un métal non noble du groupe VIII, (groupes 8, 9 et 10) de ladite classification, déposés sur un support comprenant un aluminate de métal de type $MAl_2O_4$ avec un métal M sélectionné dans le groupe constitué par le Nickel et le Cobalt de telle sorte que la quantité de métal M en interaction forte avec le support est comprise entre 0,5 et 10% poids par rapport au poids total du catalyseur, de manière préférée, comprise entre 0,7 et 8% poids et de manière encore plus préférée, comprise entre 1 et 5% poids par rapport au poids total du catalyseur.
De manière à déterminer la quantité de métal M en interaction forte avec le support, on utilise la méthode de la Réduction en Température Programmée appelée TPR.

La TPR consiste à utiliser un appareillage de type Constructeur Micromeritics, modele Autochem 2920, à introduite dans une cellule en quartz 0,5 g de catalyseur broyé dans la fraction 300 - 500 microns, à faire passer un mélange gazeux composé de 5% $H_2$ et 95% Ar (Argon étant considéré comme gaz de référence) à un débit de 20 ml/min, et à augmenter progressivement la température. Les conditions de montée en température sont les suivantes:

- rampe de montée : 5°C / min jusqu'à 1000°C et
- palier à 1000° C pendant 1 h;

Le piégeage de l'eau $H_2O$ formé est réalisé au moyen d'un tamis moléculaire par exemple de type piège à zéolithe

La figure 1 représente la réduction programmée en température d'un support comprenant de l'oxyde de nickel et de l'aluminate de nickel (AlNi). La courbe a) représente l'évolution de la température T (°C) en fonction du temps (min) et la courbe b) représente la consommation d'hydrogène en fonction du temps (min) mesurée par chromatographie au moyen d'un chromatographe équipé d'un détecteur catharométrique TCD (Thermo Conductivity Detector selon la terminologie anglo-saxonne).

Le résultat de la réduction programmée en température est fourni sur la figure 1 pour le support AlNi. On peut distinguer deux zones sur la figure :

- la zone 1 correspond à la réduction d'une fraction de nickel réductible à basse température, c'est-à-dire en interaction faible avec l'alumine à basse température, cette fraction étant réductible à une température inférieure à 500°C dans les conditions indiquées ci-avant. Il s'agit donc d'oxyde de Nickel libre, non incorporé dans le support,
- la zone 2 correspond à la fraction de nickel réductible à haute température, c'est-à-dire en interaction forte avec de l'alumine, c'est-à-dire soit des particules d'oxyde de nickel en interaction forte avec l'alumine et réductible à des températures comprise entre 500 et 750°C dans les conditions indiquées ci-avant, soit de l'oxyde de nickel engagé dans une structure aluminate de nickel de type spinelle $NiAl_2O_4$ (réductible à une température supérieure à 750°C dans les conditions indiquées ci-avant).

L'intégration des aires des pics dans les zones 1 et 2, l'aire de chaque pic étant proportionnelle à la quantité d'hydrogène consommé, permet d'estimer la quantité d'oxyde de nickel en interaction faible ou en interaction forte avec l'alumine.
Selon la figure 1, les aires des figures 1 et 2 sont les suivantes:

- aire zone 1 (interaction faible) : 24%
- aire zone 2 (interaction forte): 76%

Le catalyseur est ensuite préparé selon le mode de réalisation décrit plus bas.

Il a été trouvé que les performances des catalyseurs sont améliorées lorsque le catalyseur présente les caractéristiques suivantes :

La teneur en poids d'oxyde de l'élément du groupe VIb est strictement supérieure à 12% poids sous forme oxyde par rapport au poids total du catalyseur, et de manière préférée, strictement supérieure à 14%. Le métal du groupe VIb est de préférence choisi parmi le molybdène et le tungstène. De manière plus préférée, le métal du groupe VIb est le molybdène.

Le catalyseur contient également un métal non noble du groupe VIII choisi de préférence parmi le nickel, le cobalt, et le fer. De manière plus préférée, le métal non noble du groupe VIII est constitué de nickel. La teneur en métal non noble du groupe VIII exprimée sous forme d'oxyde est inférieure à 15% poids par rapport au poids total du catalyseur et de préférence comprise entre 1 % poids et 10% poids par rapport au poids total du catalyseur.

Le rapport molaire entre le métal non noble du groupe VIII et le métal du groupe VIb est de préférence compris entre 0,2 et 0,5 mol/mol et de manière plus préférée, entre 0,25 et 0,45 mol/mol. Lorsque le métal non noble du groupe VIII utilisé est le Ni ou le Co, le rapport molaire calculé ne prend pas en compte le Ni ou le Co engagé lors de la préparation du support.

De préférence, on utilise un catalyseur présentant un volume poreux total mesuré par porosimétrie au mercure compris entre 0,3 et 0,7 $cm^3/g$ et de manière très préféré, compris entre 0,35 et 0,65 $cm^3/g$. La porosimétrie au mercure est mesurée selon la norme ASTM D4284-92 avec un angle de mouillage de 140°, avec un appareil modèle Autopore III de la marque Microméritics.

La surface spécifique du catalyseur est de préférence inférieure à 250 $m^2/g$, et de manière plus préférée comprise entre 30 $m^2/g$ et 150 $m^2/g$.

De plus, le volume des pores du catalyseur, mesuré par porosimétrie au mercure, dont le diamètre est supérieur à 0,05 micron est compris entre 10 et 40% du volume poreux total et de manière préférée, compris entre 15 et 35% du volume poreux total.

Le volume des pores du catalyseur dont le diamètre est supérieur à 0,1 micron est de préférence compris entre 5 et 35% du volume poreux total et de manière plus préférée compris entre 10% et 30% du volume poreux total. Il a notamment été observé par les inventeurs, que cette répartition poreuse permet de limiter la formation de gommes dans le catalyseur.

Le volume des pores du catalyseur dont le diamètre est compris entre 0,004 et 0,009 microns représentent de préférence 5 à 12 % du volume poreux total et de manière préférée, 8 à 10 % du volume poreux total.

Le support du catalyseur comprend un aluminate de métal M de type $MAl_2O_4$ avec M sélectionné dans le groupe constitué par le Nickel et le Cobalt, de préférence M est le Nickel.

De manière préférée, on utilise un support présentant un volume poreux total mesuré par porosimétrie au mercure compris entre 0,3 et 0,7 $cm^3/g$ et préférentiellement compris entre 0,35 et 0,65 $cm^3/g$.

De plus, le volume des pores du support, mesuré par porosimétrie au mercure, dont le diamètre est supérieur à 0,05 micron est de préférence compris entre 5 et 50% du volume poreux total et de manière plus préférée, compris entre 10 et 40% du volume poreux total.

Le volume des pores du support dont le diamètre est supérieur à 0,1 micron est de préférence compris entre 5 et 35% du volume poreux total et de manière plus préférée entre 5 et 30% du volume poreux total.

La surface spécifique du support est de préférence inférieure à 250 $m^2/g$, et de manière plus préférée comprise entre 30 $m^2/g$ et 150 $m^2/g$.

Un mode de réalisation préféré de l'invention correspond à la mise en oeuvre d'un catalyseur contenant une teneur en poids d'oxyde de Nickel comprise entre 1 et 10% par rapport au poids total de catalyseur, une teneur en poids d'oxyde de molybdène supérieure à 12% par rapport au poids total de catalyseur et un rapport molaire Nickel/Molybdène compris entre 0,25 et 0,45, les métaux étant déposés sur un support comprenant un aluminate de nickel tel que la quantité de métal M en interaction forte avec le support est comprise entre 1 et 5% poids d'oxyde de métal par rapport au poids total de catalyseur, le taux de sulfuration des métaux constituant le catalyseur étant supérieur à 80% et le volume des pores dudit catalyseur dont le diamètre est supérieur à 0,05 microns est compris entre 15 et 35%.

De manière préférée, le catalyseur selon l'invention est dépourvu d'halogène et en particulier de fluor.

De manière préférée, le catalyseur sous forme oxyde selon l'invention, avant test catalytique, est dépourvu de carbone.

<u>Méthode de préparation.</u>

<u>Étape 1 : synthèse du support.</u>

Le support selon l'invention comprend de l'alumine, par exemple une alumine de haute surface spécifique. Le support peut également être constitué d'un mélange d'alumine et de tout autre oxyde connu de l'homme du métier tel que par exemple, de la silice, de l'oxyde de titane, de l'oxyde de magnésium, de l'oxyde de zinc, de l'oxyde de zirconium. L'alumine utilisée est sélectionnée dans les groupe des alumines permettant d'incorporer un métal M tel que le Nickel et le Cobalt. Il s'agit en particulier de l'alumine gamma, de l'alumine delta ou d'une alumine et de préférence d'une alumine gamma. On réalise une imprégnation à sec de cette alumine par une solution aqueuse contenant une quantité appropriée de nitrate de métal tel que le nitrate de nickel ou le nitrate de cobalt. Selon l'invention, la quantité de nitrate de métal correspond à une teneur en métal (en équivalent oxyde, MO avec M sélectionné dans le groupe constitué par le Nickel et le Cobalt) de 0,5 et 10% poids par rapport au poids total du catalyseur, de manière préférée comprise entre 0,7 et 8% poids et de manière encore plus préférée, comprise entre 1 et 5% poids sur le solide. Après imprégnation, le solide est laissé à maturer à température ambiante durant 12 heures, puis séché à 120°C durant 12 heures. Enfin, le solide est calciné à 750°C durant deux heures en four à moufle, ce solide est désigné dans la suite, sous le terme AlNi ou AlCo. De préférence, au maximum 40% de la quantité de métal M utilisé dans cette étape de synthèse du support est en interaction faible avec ledit support, de manière préférée au maximum 30%, et de manière encore plus préférée au maximum 25%.

Étape 2 : Préparation du catalyseur.

Le catalyseur selon l'invention peut ensuite être préparé au moyen de toute technique connue de l'homme du métier, et notamment par imprégnation des éléments des groupes VIII et VIb sur le support sélectionné. Cette imprégnation peut par exemple être réalisée selon le mode connu de l'homme du métier sous la terminologie d'imprégnation à sec, dans lequel on introduit juste la quantité d'éléments désirés sous forme de sels solubles dans le solvant choisi, par exemple de l'eau déminéralisée, de façon à remplir aussi exactement que possible la porosité du support. Le support ainsi rempli par la solution est de préférence séché. Le support préféré est l'alumine qui peut être préparée à partir de tout type de précurseurs et outils de mise en forme connus de l'homme de métier.

Après introduction des éléments des groupes VIII et VIb, celui-ci subi un traitement d'activation. Ce traitement a généralement pour but de transformer les précurseurs moléculaires des éléments en phase oxyde. Il s'agit dans ce cas d'un traitement oxydant mais un simple séchage du catalyseur peut également être effectué. Dans le cas d'un traitement oxydant, également appelé calcination, celui-ci est généralement mis en oeuvre sous air ou sous oxygène dilué, et la température de traitement est généralement comprise entre 200°C et 550°C, de préférence entre 300°C et 500°C. Des sels de métaux des groupes VIb et VIII utilisables dans le procédé de préparation du catalyseur sont par exemple le nitrate de cobalt, le nitrate de nickel, l'heptamolybdate d'ammonium ou le métatungstate d'ammonium. Tout autre sel connu de l'homme du métier présentant une solubilité suffisante et décomposable lors du traitement d'activation peut également être utilisé.

Étape 3 : Sulfuration du catalyseur.

Après calcination, les métaux déposés sur le support se trouvent sous forme d'oxyde. Dans le cas du nickel et du molybdène, les métaux se trouvent principalement sous forme de $MoO_3$ et de NiO. Avant mise en contact avec la charge à traiter, les catalyseurs subissent une étape de sulfuration. La sulfuration est réalisée en milieu sulforéducteur, c'est à dire en présence d'$H_2S$ et d'hydrogène, afin de transformer les oxydes métalliques en sulfures tels que par exemple, le $MoS_2$ et le $Ni_3S_2$. La sulfuration est réalisée en injectant sur le catalyseur un flux contenant de l'$H_2S$ et de l'hydrogène, ou bien un composé soufré susceptible de se décomposer en $H_2S$ en présence du catalyseur et de l'hydrogène. Les polysulfures tel que le diméthyldisulfure sont des précurseurs d'$H_2S$ couramment utilisés pour sulfurer les catalyseurs. La température est ajustée afin que l'$H_2S$ réagisse avec les oxydes métalliques pour former des sulfures métalliques. Cette sulfuration peut être réalisée in situ ou ex situ (en dedans ou dehors du réacteur) du réacteur d'hydrodésulfuration à des températures comprises entre 200 et 600°C et plus préférentiellement entre 300 et 500°C. Pour être actifs, les métaux doivent être substantiellement sulfurés. Un élément est considéré comme substantiellement sulfuré lorsque le rapport molaire entre le soufre (S) présent sur le catalyseur et le dit élément est au moins égal à 60% du rapport molaire théorique correspondant à la sulfuration totale de l'élément considéré:

$$(S/\text{élément})_{\text{catalyseur}} >= 0{,}6 \times (S/\text{élement})_{\text{théorique}}$$

avec:

- $(S/\text{élément})_{\text{catalyseur}}$ rapport molaire entre le soufre (S) et l'élément présent sur le catalyseur, à l'exclusion du métal (Ni ou Co) utilisé lors la préparation du support
- $(S/\text{élément})_{\text{théorique}}$ rapport molaire entre le soufre et l'élément correspondant à la sulfuration totale de l'élément en sulfure.

Ce rapport molaire théorique varie selon l'élément considéré:

- $(S/Fe)_{\text{théorique}}$= 1
- $(S/Co)_{\text{théorique}}$ = 8/9
- $(S/Ni)_{\text{théorique}}$= 2/3
- $(S/Mo)_{\text{théorique}}$ =2/1
- $(S/W)_{\text{théorique}}$ =2/1

Le catalyseur comprenant, plusieurs métaux, le rapport molaire entre le S présent sur le catalyseur et l'ensemble des éléments doit également être au moins égal à 60% du rapport molaire théorique correspondant à la sulfuration totale de chaque élément en sulfure, le calcul étant effectué au prorata des fractions molaires relatives de chaque élément, à l'exclusion du métal (Ni ou Co) engagé lors de la préparation du support.

Par exemple, pour un catalyseur comprenant du molybdène et du nickel avec une fraction molaire respective de 0,7 et 0,3, le rapport molaire minimal (S/ Mo + Ni) est donné par la relation:

$$(S/Mo+Ni)_{catalyseur} = 0{,}6 \times \{(0{,}7 \times 2) + (0{,}3 \times (2/3))\}$$

De façon très préférée, le taux de sulfuration des métaux sera supérieur à 80%.
La sulfuration est mise en oeuvre sur les métaux sous forme d'oxyde sans que soit réalisée une étape préalable de réduction des métaux. En effet, il est connu que la sulfuration de métaux réduits est plus difficile que la sulfuration de métaux sous forme d'oxydes.
Dans le procédé d'hydrogénation sélective selon l'invention, la charge à traiter est mélangée à de l'hydrogène avant d'être mise en contact avec le catalyseur. La quantité d'hydrogène injectée est telle que le rapport molaire entre l'hydrogène et les dioléfines à hydrogéner soit supérieur à 1 (stoechiométrie) et inférieure à 10, et de préférence compris entre 1 et 5 mol/mol. Un trop large excès d'hydrogène peut entraîner une forte hydrogénation des oléfines et par voie de conséquence, une diminution de l'indice d'octane de l'essence. La totalité de la charge est généralement injectée à l'entrée du réacteur. Toutefois, il peut être avantageux, dans certains cas d'injecter une fraction ou la totalité de la charge entre deux lits catalytiques consécutifs placés dans le réacteur. Ce mode de réalisation permet notamment de continuer à opérer le réacteur si l'entrée du réacteur se trouve bouchée par dépôts de polymères, de particules, ou de gommes présentes dans la charge.
Le mélange constitué de l'essence et de l'hydrogène est mis en contact avec le catalyseur sous une à une température comprise entre 80°C et 220°C, et de préférence entre 90°C et 200°C, avec une vitesse spatiale liquide (LHSV) comprise entre $1h^{-1}$ et $10\ h^{-1}$. La pression est ajustée afin que le mélange réactionnel soit majoritairement sous forme liquide dans le réacteur. La pression est comprise entre 0,5 MPa et 5 MPa et de préférence entre 1 et 4 MPa.
L'essence traitée dans les conditions énoncées ci-dessus, présente une teneur en dioléfines et en mercaptans réduite. Généralement, l'essence produite contient moins de 1 % poids de dioléfines, et de préférence moins de 0,5 % poids de dioléfines. La teneur en composés soufrés légers dont la température d'ébullition est inférieure à celle du thiophène (84°C) sont généralement convertis à plus de 50%. Il est donc possible de séparer la fraction légère de l'essence par distillation et d'envoyer directement cette fraction au pool essence sans traitement complémentaire. La fraction légère de l'essence a généralement un point final inférieur à 120°C, et de préférence inférieure à 100°C et de façon très préférée inférieure à 80°C.
Ce nouveau catalyseur est particulièrement adapté pour être mis en oeuvre dans le cadre du procédé décrit dans la demande de brevet EP01077247 A1.

<u>Exemple 1</u>

Préparation des catalyseurs A, B, C et D (non conforme), E et F (conforme à l'invention)

<u>Synthèse du support</u>

Pour le nickel, on utilise une alumine de haute surface spécifique (A1-1) fourni par la société Axens. On réalise une imprégnation à sec de cette alumine par une solution aqueuse contenant une quantité appropriée de nitrate de nickel. En l'occurrence la quantité de nitrate de nickel correspond à une teneur en nickel (en équivalent oxyde, NiO) de 4% poids sur le solide. Après imprégnation, le solide est laissé à maturer à température ambiante durant 12 heures, puis séché à 120°C durant 12 heures. Enfin, le solide est calciné à 750°C durant deux heures en four à moufle, ce solide est désigné sous le terme AlNi dans la suite.
Dans le cas du cobalt, on utilise le même support alumine Al-1 fourni par la société Axens. On réalise une imprégnation à sec de ces alumines par une solution aqueuse contenant une quantité appropriée de nitrate de cobalt, telle que la teneur en Co (en équivalent oxyde CoO) soit également de 4%. Après imprégnation, le solide est laissé à maturer à température ambiante durant 12 heures, puis séché à 120°C durant 12 heures. Enfin, le solide est calciné à 750°C durant deux heures en four à moufle, ce solide est désigné sous le terme AlCo-1 dans la suite. Une autre alumine Al-2 fournie par Axens et présentant une proportion de volume poreux de pores de diamètre supérieur à 0,1 micron important a également été imprégnée par du nitrate de Co puis calcinée selon le même protocole que pour AlCo-2. Le support ainsi obtenu est appelé AlCo-2 . Les propriétés des supports alumines et des supports dopés au Ni ou au Co sont fournies dans le tableau 1 ci dessous. On observe que contrairement à AlNi et AlCo-1, AlCo-2 n'est pas conforme à l'invention de par sa fraction de volume (0,1 micron) élevée.

**Tableau 1**: propriétés des supports Al-1, Al-2 et des support AlNi, AlCo-1 et AlCo-2.

| | Al-1 | Al-2 | AlNi | AlCo-1 | AlCo-2 |
|---|---|---|---|---|---|
| SBET (m2g-1) | 264 | 150 | 147 | 144 | 90 |
| Volume poreux total (Hg) $cm^3/g$ | 0,61 | 0,92 | 0,51 | 0,50 | 0,75 |
| Volume poreux (Hg) 3 pores> 0,1 micron $cm^3/g$ | 0,13 | 0,41 | 0,07 | 0,08 | 0,32 |
| V (0,1 microns) / V total | 0,21 | 0,45 | 0,14 | 0,16 | 0,42 |
| teneur en NiO % pds | / | / | 4,0 | / | / |
| teneur en CoO / % pds | / | / | / | 4,0 | 4,0 |

Synthèse des catalyseurs A, B, C et D(non conformes), E et F (conformes à l'invention)

Les catalyseurs A, B, C, D, E et F sont préparés selon la méthode dite de l'imprégnation à sec en utilisant le support AlNi. Le protocole de synthèse consiste à réaliser une imprégnation à sec d'une solution d'heptamolybdate d'ammonium et de nitrate de nickel, le volume de la solution aqueuse contenant les précurseurs métalliques étant égal au volume de reprise à l'eau correspondant à la masse de support à imprégner. Les concentrations des précurseurs dans la solution sont ajustées de manière à déposer sur le support les teneurs pondérales en oxydes métalliques souhaitées. Le solide est ensuite laissé à maturer à température ambiante durant 12 heures, puis séché à 120°C, durant 12 heures. Finalement, le solide est calciné à 500°C durant deux heures sous flux d'air (1litre/( par gramme.heure). Les caractéristiques des catalyseurs ainsi préparés sont fournies dans le tableau 2 ci-dessous. Les catalyseurs préparés se distinguent par leur teneur en phase active.

**Tableau 2** : caractéristiques des catalyseurs A, B, C, D, E, F sous forme oxyde.

| Catalyseur | A | B | C | D | E | F |
|---|---|---|---|---|---|---|
| % pds en $MoO_3$ | 5,0 | 7,9 | 10,0 | 11,3 | 12,0 | 14,0 |
| % pds en NiO* | 1,2 | 1,5 | 2,2 | 2,2 | 2,5 | 2,6 |
| Rapport Ni/Mo** | 0,48 | 0,37 | 0,43 | 0,38 | 0,4 | 0,36 |
| S(BET) $m^2/g$ | 143 | 138 | 133 | 131 | 133 | 127 |
| V poreux Hg $cm^3/g$ | 0,48 | 0,47 | 0,47 | 0,45 | 0,45 | 0,43 |
| V poreux Hg $cm^3/g$ (pores > 0,05 micron) | 0,16 | 0,15 | 0,15 | 0,14 | 0,14 | 0,14 |
| V(>0,05 micron) en % du V poreux total | 33% | 32% | 32% | 31% | 31% | 33% |
| V poreux Hg $cm^3/g$ (0,004 micron< pores < 0,009 micron) et en % du V poreux total | 0,06<br>12,5% | 0,06<br>12,7% | 0,05<br>10,6% | 0,05<br>11,1% | 0,04<br>9% | 0,04<br>9,3% |
| * teneur corrigée de la quantité de NiO engagée dans le support AlNi<br>** hors nickel engagé dans le support AlNi | | | | | | |

Selon les critères de porosité, surface spécifique, teneur pondérale en $MoO_3$ et rapport molaire Ni/Mo (hors nickel engagé dans le support AlNi), les catalyseurs E et F sont donc conformes à l'invention ; au contraire des catalyseurs A, B, C et D (teneur en molybdène plus faible).

Évaluation des catalyseurs

L'activité des catalyseurs A, B, C et D (non conformes), E, F (conformes à l'invention) est évaluée par un test d'hydrogénation sélective d'un mélange de molécules modèles effectué dans un réacteur autoclave agité de 500 ml. Typiquement entre 2 et 6 g de catalyseur sont sulfurés à pression atmosphérique en banc de sulfuration sous mélange $H_2S/H_2$ constitué de 15% volumique d'$H_2S$ à 1 1/h/g de catalyseur et à 400°C durant deux heures (rampe de 5°C/min)

suivi d'un palier de 2 heures sous hydrogène pur à 200°C. Ce protocole permet d'obtenir des taux de sulfuration supérieurs à 80% pour l'ensemble des catalyseurs conformément à l'invention. Le catalyseur ainsi sulfuré est transféré dans le réacteur à l'abri de l'air puis mis au contact de 250 ml de charge modèle sous une pression totale de 1,5 MPa et une température de 160°C. La pression est maintenue constante durant le test par apport d'hydrogène. La charge utilisée pour le test d'activité présente la composition suivante : 1000 ppm poids de soufre sous forme méthyl 3-thiophène, 100 ppm poids de soufre sous forme de propane-2-thiol, 10% poids oléfine sous forme de d'hexène-1, dans du n-heptane. Le temps t=0 du test correspond à la mise en contact du catalyseur et de la charge. La durée du test est fixée à 45 minutes et l'analyse chromatographique en phase gaz de l'effluent liquide obtenu permet d'évaluer les activités des différents catalyseurs en hydrogénation de l'isoprène (formation des méthylbutènes), hydrogénation du 1-héxène (formation du n-hexane) et alourdissement des mercaptans légers (disparition du pic chromatographique associé au 2-propanethiol). L'activité du catalyseur pour chaque réaction est définie par rapport à la constante de vitesse obtenue pour chaque réaction normalisée par gramme de catalyseur. La constante de vitesse est calculée en considérant un ordre 1 pour la réaction:

$$A(X) = k(X) / m$$

avec :

A(X) : activité du catalyseur pour la réaction X, en $min^{-1}$ / g de catalyseur

k constante de vitesse pour la réaction considérée, en $min^{-1}$ étant calculée selon la formule

$$k(X) = (1/45) * \ln (100 / (100 - Conv(X)))$$

avec

45: durée du test en minutes
Conv(X): conversion du composé X ; X = isoprène ou propane-2-thiol ou héxène-1
m : masse de catalyseur (forme oxyde) engagée dans le test
X : réaction considérée :
X = isoprène : hydrogénation de l'isoprène
X= héxène 1: hydrogénation du héxène 1
X = propane-2-thiol : conversion du propane-2-thiol

La sélectivité du catalyseur vis à vis de l'hydrogénation de l'isoprène est égale au rapport des activités du catalyseur en hydrogénation de l'isoprène et de l'hexène 1 :A(isoprène)/A(héxène 1)

Les résultats obtenus sur les différents catalyseurs sont reportés dans le tableau 3 ci-dessous.

**Tableau 3 :** performances des catalyseurs en test molécule modèle.

| Catalyseur | A | B | C | D | E | F |
|---|---|---|---|---|---|---|
| A(isoprène) *$10^3$ | 2,5 | 3,3 | 3,7 | 4,4 | 4,6 | 4,6 |
| A(1-héxène)*$10^3$ | 0,015 | 0,018 | 0,020 | 0,025 | 0,027 | 0,028 |
| A(isoprène)/A(1-héxène) | 167 | 183 | 185 | 176 | 170 | 164 |
| A(propane-2-thiol)*$10^3$ | 13,0 | Infini* | Infini* | Infini* | Infini* | Infini* |
| * conversion totale du propane-2-thiol | | | | | | |

On constate que l'ensemble des catalyseurs sont très sélectifs vis à vis de la réaction d'hydrogénation de la dioléfine. Ces catalyseurs permettent donc d'hydrogéner substantiellement l'isoprène sans hydrogéner significativement le 1-héxène.
On constate également que dans les conditions du test, la conversion du mercaptan léger est totale pour l'ensemble des catalyseurs hormis pour le catalyseur A, moins chargé en phase active.

En effet, dans le cas des catalyseurs B, C, D, E et F, une activité infinie signifie une conversion totale du 2-propanethiol. En revanche, seuls les catalyseurs E et F conformes à l'invention présentent une activité maximale en hydrogénation de l'isoprène.
Il apparaît donc que les catalyseurs conformes à l'invention sont capables d'effectuer simultanément l'hydrogénation sélective de la dioléfine avec conversion simultanée du mercaptan léger.

Exemple 2 : Influence du taux de sulfuration.

Le catalyseur E décrit précédemment est évalué dans le même test molécule modèle mais sans étape de sulfuration préalable. Le degré de sulfuration du solide est donc nul. La diminution de la température de palier sous mélange $H_2S/H_2$ (de 400°C à typiquement 100 à 150°C) lors du protocole de sulfuration du catalyseur en banc de sulfuration permet également d'obtenir des taux de sulfuration intermédiaires pour le catalyseur E. Le tableau 4 reporte les résultats catalytiques obtenus sur ce catalyseur en fonction de son taux de sulfuration. On constate que la sulfuration préalable du catalyseur a un effet bénéfique important sur l'activité du catalyseur en hydrogénation de l'isoprène et en conversion du 2 propanethiol, ainsi que sur sa sélectivité.

**Tableau 4 :** performances du catalyseur E en fonction de son taux de sulfuration.

| | E non sulfuré | E sulfuré | | |
|---|---|---|---|---|
| Taux de sulfuration / %* | 0 | 35 | 68 | 83 |
| A(isoprène) *$10^3$ | 0,5 | 2,1 | 3,6 | 4,6 |
| A(1-héxène)*$10^3$ | 0,012 | 0,012 | 0,019 | 0,027 |
| A(isoprène)/A(1-héxène) | 41 | 175 | 189 | 170 |
| A(propane-2-thiol)*$10^3$ | 5,0 | Infini** | Infini** | Infini* |
| * le nickel engagé dans le support AlNi n'est pas pris en compte<br>** conversion totale du 2-propanethiol | | | | |

Exemple 3 : Influence du rapport molaire Ni/Mo.

Dans cet exemple les catalyseurs G et H sont préparés selon le protocole opératoire décrit dans l'exemple 1. Ces catalyseurs ne diffèrent substantiellement du catalyseur E que par leur teneur en nickel, et donc par le rapport molaire Ni/Mo (tableau 5). Ils ne sont donc pas conformes à l'invention.

**Tableau 5 :** caractéristiques des catalyseurs G et H sous forme oxyde.

| Catalyseur | G | H |
|---|---|---|
| % pds en $MoO_3$ | 12,2 | 12,0 |
| % pds en NiO* | 0,9 | 8,7 |
| Ni/Mo molaire* | 0,14 | 1,39 |
| S(BET) $m^2/g$ | 132 | 120 |
| V poreux total $cm^3/g$ | 0,46 | 0,41 |
| V poreux Hg $cm^3/g$ (pores > 0,05 micron) et en % du V poreux total | 0,14<br>30% | 0,12<br>29% |
| * hors nickel engagé dans le support AlNi | | |

Tout comme précédemment, les catalyseurs G et H sont évalués selon le même test molécule modèle, pour ces catalyseurs également le protocole de sulfuration adopté permet d'obtenir des taux de sulfuration supérieurs à 80%. Ces catalyseurs sont comparés au catalyseur E, qui présente un rapport molaire Ni/Mo de 0,40 compris dans la fourchette préférée (tableau 6).

**Tableau 6 :** performances des catalyseurs E, G et H en test molécule modèle.

| Catalyseur | E | G | H |
|---|---|---|---|
| Taux de sulfuration % | 83% | 86% | 88% |
| A(isoprène) *$10^3$ | 4,6 | 1,2 | 4,7 |
| A(1-héxène)*$10^3$ | 0,027 | 0,009 | 0,030 |
| A(isoprène)/A(1-héxène) | 170 | 133 | 157 |
| A(propane-2-thiol)*$10^3$ | Infini* | 9,7 | Infini* |
| * conversion totale du propane-2-thiol | | | |

On constate que le catalyseur G (rapport Ni/Mo de 0,14) présente un déficit d'activité en hydrogénation de l'isoprène et en conversion du 2-propanethiol comparativement au catalyseur E conforme. On observe également que l'augmentation de la teneur en nickel (catalyseur H, rapport Ni/Mo de 1,39) conduit par rapport au catalyseur E a une légère augmentation de l'activité en hydrogénation des mono-oléfines au détriment de l'hydrogénation des dioléfines, la sélectivité A(isoprène)/A(hexène 1) diminuant. En revanche, l'activité en hydrogénation de l'isoprène n'est pas significativement affectée par l'augmentation de la teneur en Nickel.

<u>Exemple 4 :</u> Influence du volume macroporeux compris entre 10 et 40% du volume poreux total.

Les catalyseurs I, J et K sont préparés selon l'étape 2 du procédé de préparation des catalyseurs, en utilisant des supports alumine Al-3, Al-4 et Al-5 fournis par la sociétés Axens dont les propriétés sont données dans le tableau 7 ci-dessous.

**Tableau 7 :** Propriétés des supports Al-3, Al-4, Al-5.

| | Al-3 | Al-4 | Al-5 |
|---|---|---|---|
| SBET ($m^2g^{-1}$) | 124 | 143 | 293 |
| Volume poreux total (Hg) $cm^3/g$ | 0,72 | 1,10 | 0,75 |
| Volume poreux (Hg) pores > 0,1 micron $cm^3/g$ | 0,08 | 0,32 | 0,01 |
| V (pores > 0,1 micron) en % du V poreux total | 11% | 29% | 1% |
| Volume poreux (Hg) pores> 0,05 micron $cm^3/g$ | 0,17 | 0,47 | 0,03 |
| V (pores > 0,05 micron) en % du V poreux total | 24% | 43% | 4% |

Les catalyseurs L et M sont préparés selon le protocole décrit dans l'exemple 1 en utilisant des supports alumine Al-3, Al-4, Al-5 dont les propriétés sont données dans le tableau 1.
Les caractéristiques de ces catalyseurs ainsi que celle du catalyseur E sont fournies dans le tableau 8 ci - dessous.
Le catalyseur L NiMo / AlCo, conforme à l'invention, est préparé selon le protocole défini dans l'exemple 1, en utilisant le support AlCo-1.

Le catalyseur M NiMo / AlCo non conforme à l'invention est préparé selon le protocole défini dans l'exemple 1, en utilisant le support AlCo-2.
Le catalyseur I n'est pas conforme à l'invention car le support alumine Al-3 n'a pas été préalablement passivé par le nickel (pas d'oxyde de nickel en interaction forte avec l'alumine). De même, les catalyseurs J et K ne sont pas conformes à l'invention car les supports alumine Al-4 et Al-5 n'ont pas été préalablement passivés par le nickel et de par leur fraction de volume macroporeux respectivement trop forte et trop faible.

**Tableau 8:** caractéristiques des catalyseurs E, I, J, K, L et M

| Catalyseur | E | I | J | K | L | M |
|---|---|---|---|---|---|---|
| % pds en $MoO_3$ | 12,0 | 12,1 | 12,3 | 12,1 | 12,0 | 12,1 |
| % pds en NiO | 2,5* | 2,5 | 2,5 | 2,2 | 2,4 | 2,5 |
| % pds en CoO | / | / | / | / | 3,4 | 3,4 |

(suite)

| Catalyseur | E | I | J | K | L | M |
|---|---|---|---|---|---|---|
| S(BET) $m^2/g$ | 133 | 106 | 116 | 278 | 128 | 82 |
| V poreux Hg $cm^3/g$ | 0,45 | 0,58 | 1,00 | 0,65 | 0,44 | 0,65 |
| V poreux Hg $cm^3/g$ (pores> 0,05 micron) | 0,14 | 0,16 | 0,45 | 0,02 | 0,15 | 0,35 |
| V poreux Hg $cm^3/g$ (pores> 0,1 micron) | 0,11 | 0,08 | 0,31 | 0,01 | 0,10 | 0,28 |
| V(pores > 0,05 micron) en % du V poreux total | 31% | 28% | 45% | 3% | 34% | 54% |
| V(pores > 0,1 micron) en % du V poreux total | 25% | 14% | 31% | 2% | 23% | 43% |
| DRT ($g/cm^3$)** | 0,87 | 0,69 | 0,48 | 0,59 | 0,85 | 0,63 |
| V poreux Hg $cm^3/g$ (0,004 micron< pores < 0,009 micron) et en % du V poreux total | 0,04<br>9% | 0,01<br>2% | 0,01<br>1 % | 0,35<br>54% | 0,04<br>9% | 0,02<br>3% |
| * la teneur en nickel engagé dans le support AlNi n'est pas prise en compte<br>** Densité de Remplissage Tassée | | | | | | |

La DRT correspond à la quantité maximale de catalyseur dans un volume donné, elle est normalisée en gramme de catalyseur par centimètre cube. 3. Celle-ci est évaluée par un vibreur de marque RETSCH AS 200 control et une éprouvette de volume connu et de diamètre adapté aux granulométries des produits (le diamètre de l'éprouvette doit être 10 fois supérieur à celui des particules). Après tarage, l'éprouvette, de volume V, est remplie sur le vibreur avec le produit en l'état. La vibration est maintenue 3 minutes à une amplitude de 0,03 inch en maintenant le niveau constant par ajout de produit. A la fin du tassement, la surface du produit est arrasée à la partie supérieure de l'éprouvette et la masse de l'éprouvette pleine est pesée. La DRT est alors obtenue en divisant la masse corrigée de la perte au feu du catalyseur par le volume de l'éprouvette. D'une manière générale, moins le catalyseur sera poreux, plus celui-ci présentera une densité de chargement importante. Ces catalyseurs sont testés sur une essence totale de craquage catalytique dont les caractéristiques sont fournies dans le tableau 8 ci - dessous. L'évaluation de la teneur en dioléfines conjuguées est basée sur la réaction des diènes conjugués avec l'anhydride maléique selon la réaction de Diels-Alder. La MAV (Maléique Anhydride Value) est proportionnelle à la teneur en dioléfine présentes et est déterminée selon une méthode standard IFP: la méthode 9407. La MAV s'exprime en milligrammes d'anhydride maléique réagi par gramme d'échantillon. La méthode IFP9407 est similaire à la méthode 326-82UOP normalisée qui donne la DV (Diène Value), les deux grandeurs étant liées par la relation MAV=3.86 DV. Les teneurs pondérales en aromatiques et en oléfines de la charge sont estimées par chromatographie en phase gazeuse. Les mercaptans légers de la charge et de l'effluent sont quantifiés par chromatographie. Le matériel employé est un chromatographe HP 5890 Série II (Agilent Technologies) couplé à un détecteur spécifique 355 (Sievers Inc., Boulder, CO, USA). La colonne employée est une colonne non polaire PONA (50 m, 0,2 mm, 0,20 microns). Les conditions opératoires sont dérivées de la méthode standard ASTM D 5623 et les composés soufrés sont identifiés par comparaison avec les temps de rétention des composés soufrés de référence.

**Tableau 8:** caractéristiques de l'essence totale de craquage catalytique.

| | |
|---|---|
| teneur en S | 3460 ppm |
| teneur en S mercaptans légers * | 116 ppm |
| MAV | 17,5 |
| teneur en aromatiques | 36,5 % pds |
| teneur en oléfines | 34,4 % pds |
| distillation ASTM | Point 5%: 30°C<br>Point 95%: 233°C |
| * methanethiol, ethanethiol et propanethiols | |

Le protocole d'évaluation des catalyseurs sur charge réelle est le suivant. 50 $cm^3$ de catalyseur sont sulfurés sous un mélange n-heptane + 4%DMDS (diméthyldisulfure) / $H_2$, le rapport volumique $H_2$/charge de sulfuration étant de 500 Normaux litres / litres de charges (N1/1) et la VVH de la charge de sulfuration étant de 2 $h^{-1}$ (volume de charge

de sulfuration / volume de catalyseur / heure). La rampe de montée en température est de 1°C/min jusqu'à une température de palier de 350°C. Le palier est maintenu durant 4 h. La température est ensuite redescendue à 120°C, la charge de sulfuration est remplacée par du n-heptane pur pendant 4 heures puis l'essence de FCC est injectée, et les conditions opératoires ajustées aux valeurs désirées. Les conditions opératoires de test sont les suivantes: pression totale = 2,5 MPa, rapport $H_2$/charge = 6 N1/1, VVH = 3 $h^{-1}$. Les catalyseurs sont évalués à 140°C et à 160°C, la durée de chaque palier est ajustée en fonction de la durée de stabilisation du catalyseur, évaluée par des analyses régulières de MAV de l'effluent.

L'évolution de la MAV résiduelle de l'effluent en fonction du temps pour les catalyseurs E, I, J et K est représentée sur la figure 2 ci-dessous.

On constate que les catalyseurs E conforme à l'invention élimine le plus efficacement les dioléfines à 140 et à 160°C puisque la MAV résiduelle obtenue est la plus faible. Le catalyseur J, pénalisé par un volume poreux trop important, présente un déficit d'activité hydrogénante substantiel. Le catalyseur K quant à lui présente initialement une activité comparable au catalyseur I mais est moins résistant à l'encrassement d'où une désactivation plus importante. Des analyses de la teneur en carbone résiduel sur les catalyseurs usés après extraction au toluène montrent que la teneur en carbone du catalyseur K est environ deux fois plus importante que la teneur en carbone du catalyseur E. Pour l'ensemble des catalyseurs, dans les conditions opératoires choisies l'hydrogénation des oléfines reste marginale et inférieure à 2%.

Les catalyseurs L et M sont évalués sur la même charge et dans les mêmes conditions opératoires que celles employée pour les catalyseur E, I, J et K. La figure 3 reporte l'évolution de la MAV en fonction du temps sous charge pour les catalyseurs L et M.

On constate que le catalyseur M non conforme présente un déficit d'activité par rapport au catalyseur L conforme. Par ailleurs en terme d'activité le catalyseur L est très similaire au catalyseur E également conforme. Pour ce test également le taux d'hydrogénation des oléfines reste marginal et inférieur à 2%.

Le tableau 9 reporte l'évolution de la conversion en mercaptans légers pour les 6 catalyseurs, à chaque température après stabilisation du catalyseur (dernière recette de chaque palier). On constate que dans les conditions opératoires choisies, l'ensemble des catalyseurs convertissent substantiellement les mercaptans légers de la charge, cette conversion étant même totale pour les catalyseurs E, I, L et M à 160°C. On constate en revanche que les catalyseurs E et L, conformes à l'invention sont les plus efficaces pour l'élimination des mercaptans légers à 140°C.

**Tableau 9:** conversion en mercaptans légers à 140°C et 160°C obtenue sur les catalyseurs E, I, J, K, L et M.

| | Conversion à 140°C | Conversion à 160°C |
|---|---|---|
| catalyseur E | 97% | 100% |
| catalyseur I | 94% | 100% |
| catalyseur J | 89% | 95% |
| catalyseur K | 90% | 96% |
| catalyseur L | 96% | 100% |
| catalyseur M | 93% | 100% |

## Revendications

**1.** Procédé d'hydrogénation sélective de composés poly insaturés en composés mono insaturés permettant conjointement l'alourdissement des composés soufrés légers saturés par réaction avec les composés insaturés contenus dans des essences, ledit procédé mettant en oeuvre un catalyseur contenant au moins un métal du groupe VIb et au moins un métal non noble du groupe VIII déposés sur un support comprenant un aluminate de métal de type $MAl_2O_4$ dans lequel le métal M est sélectionné dans le groupe constitué par le Nickel et le Cobalt et tel que la quantité de métal M en interaction forte avec le support est comprise entre 0,5 et 10% poids en équivalent oxyde, et dans lequel

- la teneur en poids d'oxyde de l'élément du groupe VIb est strictement supérieure à 12% poids par rapport au poids du catalyseur,
- la teneur en poids d'oxyde de l'élément du groupe VIII est inférieure à 15% poids par rapport au poids du catalyseur,
- le taux de sulfuration des métaux constituants ledit catalyseur est au moins égal à 60%,

• le volume des pores dudit catalyseur dont le diamètre est supérieur à 0,05 microns est compris entre 10 et 40% du volume poreux total,

• le rapport molaire entre le métal non noble du groupe VIII et le métal du groupe VIb étant compris entre 0,2 et 0,5 mol/mol

**2.** Procédé selon la revendication 1 dans lequel le catalyseur comprend un métal du groupe VIb choisi parmi le Molybdène et le Tungstène.

**3.** Procédé selon la revendication 2 dans lequel le métal du groupe VIb est le Molybdène.

**4.** Procédé selon la revendication 1 dans lequel le catalyseur comprend un métal non noble du groupe VIII choisi parmi le Nickel, le Cobalt et le Fer.

**5.** Procédé selon la revendication 4 dans lequel le métal non noble du groupe VIII est le Nickel.

**6.** Procédé selon l'une des revendications précédentes dans lequel le catalyseur comprend une teneur en poids d'oxyde de l'élément du groupe VIII comprise entre 1 et 10% poids par rapport au poids du catalyseur.

**7.** Procédé selon la revendication 1 dans lequel le taux de sulfuration des métaux constituants ledit catalyseur est supérieur à 80%.

**8.** Procédé selon l'une des revendications précédentes dans lequel le rapport molaire entre le métal non noble du groupe VIII et le métal du groupe VIb est compris entre 0,25 et 0,45.

**9.** Procédé selon l'une des revendications précédentes dans lequel le catalyseur présente un volume poreux total compris entre 0,3 $cm^3/g$ et 0,7 $cm^3/g$.

**10.** Procédé selon l'une des revendications précédentes dans lequel les pores du catalyseur dont le diamètre est supérieur à 0,1 micron est compris entre 5 et 35% du volume poreux total.

**11.** Procédé selon l'une des revendications précédentes dans lequel les pores du catalyseur dont le diamètre est supérieur à 0,05 micron représentent 15 à 35% du volume poreux total.

**12.** Procédé selon l'une des revendication précédentes dans lequel le support comprend un aluminate de métal de type $MAl_2O_4$ où M est le Nickel.

**13.** Procédé selon la revendication 12 dans lequel la quantité de métal M en interaction forte avec le support est comprise entre 1 et 5% poids en équivalent oxyde.

**14.** Procédé selon la revendication 12 ou 13 dans lequel au maximum 40% de la quantité de métal M utilisé dans l'étape de synthèse du support est en interaction faible avec ledit support.

**15.** Procédé selon la revendication 14 dans lequel au maximum 30% de la quantité de métal M utilisé dans l'étape de synthèse du support est en interaction faible avec ledit support.

**16.** Procédé selon la revendication 14 ou 15 dans lequel au maximum 25% de la quantité de métal M utilisé dans l'étape de synthèse du support est en interaction faible avec ledit support.

**17.** Procédé selon l'une des revendications précédentes dans lequel catalyseur contient une teneur en poids d'oxyde de Nickel comprise entre 1 et 10% par rapport au poids total du catalyseur, une teneur en poids d'oxyde de molybdène supérieure à 12% par rapport au poids total du catalyseur et un rapport molaire Nickel/Molybdène compris entre 0,25 et 0,45, les métaux étant déposés sur un support comprenant un aluminate de nickel de telle sorte que la quantité de métal M en interaction forte avec le support est comprise entre 1 et 5% poids d'oxyde de métal par rapport au poids total de catalyseur, le taux de sulfuration des métaux constituant le catalyseur est supérieur à 80% et le volume des pores dudit catalyseur dont le diamètre est supérieur à 0,05 microns est compris entre 15 et 35%.

**18.** Procédé d'hydrogénation sélective selon l'une des revendications précédentes dans lequel la charge est mis en contact avec le catalyseur sous une température comprise entre 80°C et 220°C avec une vitesse spatiale liquide

comprise entre $1h^{-1}$ et $10h^{-1}$ et une pression comprise entre 0,5 et 5 MPa.

**Patentansprüche**

1. Verfahren zur selektiven Hydrierung von mehrfach ungesättigten Verbindungen zu einfach ungesättigten Verbindungen, welches es gleichzeitig ermöglicht, die leichten gesättigten Schwefelverbindungen durch Reaktion mit den ungesättigten Verbindungen, welche in Benzinsorten enthalten sind, in schwerere zu überführen, wobei bei dem Verfahren ein Katalysator eingesetzt wird, der mindestens ein Metall der Gruppe VIb und mindestens ein unedles Metall der Gruppe VIII enthält, wobei diese auf einen Träger aufgebracht werden, der ein Metallaluminat des Typs $MAl_2O_4$ umfasst, bei welchem das Metall M aus der Gruppe ausgewählt ist, die aus Nickel und Kobalt besteht, und welches derart beschaffen ist, dass die Menge an Metall M, das in starker Wechselwirkung mit dem Träger ist, im Bereich von 0,5 bis 10 Gewichts-% an Oxid-Äquivalenten liegt, und wobei

   - der gewichtsmäßige Gehalt an Oxid des Elements der Gruppe VIb streng höher als 12 Gewichts-% ist, bezogen auf das Gewicht des Katalysators,
   - der gewichtsmäßige Gehalt an Oxid des Elements der Gruppe VIII niedriger als 15 Gewichts-% ist, bezogen auf das Gewicht des Katalysators,
   - der Sulfurierungsgrad der Metalle, aus denen der Katalysator besteht, mindestens gleich 60 % ist,
   - das Volumen der Poren des Katalysators, deren Durchmesser größer als 0,05 Mikrometer ist, zwischen 10 und 40 % einschließlich der Grenzwerte am Gesamtporenvolumens ausmacht,
   - das Molverhältnis zwischen dem unedlen Metall der Gruppe VIII und dem Metall der Gruppe VIb im Bereich von 0,2 bis 0,5 mol/mol liegt

2. Verfahren nach Anspruch 1, wobei der Katalysator ein Metall der Gruppe VIb umfasst, das aus Molybdän und Wolfram ausgewählt ist.

3. Verfahren nach Anspruch 2, wobei es sich bei dem Metall der Gruppe VIb um Molybdän handelt.

4. Verfahren nach Anspruch 1, wobei der Katalysator ein unedles Metall der Gruppe VIII umfasst, das aus Nickel, Kobalt und Eisen ausgewählt ist.

5. Verfahren nach Anspruch 4, wobei es sich bei dem unedlen Metall der Gruppe VIII um Nickel handelt.

6. Verfahren nach einem der vorhergehenden Ansprüche, wobei der Katalysator einen gewichtsmäßigen Gehalt an Oxid des Elements der Gruppe VIII im Bereich von 1 bis 10 Gewichts-% umfasst, bezogen auf das Gewicht des Katalysators.

7. Verfahren nach Anspruch 1, wobei der Sulfurierungsgrad der Metalle, aus denen der Katalysator besteht, höher als 80 % ist.

8. Verfahren nach einem der vorhergehenden Ansprüche, wobei das Molverhältnis zwischen dem unedlen Metall der Gruppe VIII und dem Metall der Gruppe VIb im Bereich von 0,25 bis 0,45 liegt.

9. Verfahren nach einem der vorhergehenden Ansprüche, wobei der Katalysator ein Gesamtporenvolumen im Bereich von 0,3 $cm^3/g$ bis 0,7 $cm^3/g$ aufweist.

10. Verfahren nach einem der vorhergehenden Ansprüche, wobei die Poren des Katalysators, deren Durchmesser größer als 0,1 Mikrometer ist, zwischen 5 und 35 % einschließlich der Grenzwerte am Gesamtporenvolumen ausmachen.

11. Verfahren nach einem der vorhergehenden Ansprüche, wobei die Poren des Katalysators, deren Durchmesser größer als 0,05 Mikrometer ist, 15 bis 35 % am Gesamtporenvolumen ausmachen.

12. Verfahren nach einem der vorhergehenden Ansprüche, wobei der Träger ein Metallaluminat des Typs $MAl_2O_4$ umfasst, wobei M gleich Nickel ist.

13. Verfahren nach Anspruch 12, wobei die Menge an Metall M, welche in starker Wechselwirkung mit dem Träger ist,

im Bereich von 1 bis 5 Gewichts-% an Oxid-Äquivalenten liegt.

**14.** Verfahren nach Anspruch 12 oder 13, wobei höchstens 40 % der Menge an Metall M, welches im Schritt der Synthese des Trägers verwendet wird, in schwacher Wechselwirkung mit dem Träger ist.

**15.** Verfahren nach Anspruch 14, wobei höchstens 30 % der Menge an Metall M, welches im Schritt der Synthese des Trägers verwendet wird, in schwacher Wechselwirkung mit dem Träger ist.

**16.** Verfahren nach Anspruch 14 oder 15, wobei höchstens 25 % der Menge an Metall M, welches im Schritt der Synthese des Trägers verwendet wird, in schwacher Wechselwirkung mit dem Träger ist.

**17.** Verfahren nach einem der vorhergehenden Ansprüche, wobei der Katalysator einen gewichtsmäßigen Gehalt an Nickeloxid im Bereich von 1 bis 10 %, bezogen auf das Gesamtgewicht des Katalysators, einen gewichtsmäßigen Gehalt an Molybdänoxid von mehr als 12 %, bezogen auf das Gesamtgewicht des Katalysators, und ein Nickel/Molybdän-Molverhältnis im Bereich von 0,25 bis 0,45 enthält, wobei die Metalle auf einen Träger aufgebracht werden, der Nickelaluminat umfasst, und zwar derart, dass die Menge an Metall M, welches in starker Wechselwirkung mit dem Träger ist, im Bereich von 1 bis 5 Gewichts-% an Metalloxid liegt, bezogen auf das Gesamtgewicht des Katalysators, der Sulfurierungsgrad der Metalle, aus welchen der Katalysator besteht, höher als 80 % ist und das Volumen der Poren des Katalysators, deren Durchmesser größer als 0,05 Mikrometer ist, zwischen 15 und 35 % einschließlich der Grenzwerte ausmacht.

**18.** Selektives Hydrierungsverfahren nach einem der vorhergehenden Ansprüche, wobei die Charge bei einer Temperatur im Bereich von 80 °C bis 220 °C mit einer Flüssigkeits-Raumgeschwindigkeit im Bereich von 1 $h^{-1}$ bis 10 $h^{-1}$ und einem Druck im Bereich von 0,5 bis 5 MPa mit dem Katalysator in Kontakt gebracht wird.

## Claims

**1.** A process for selective hydrogenation of polyunsaturated compounds into mono-unsaturated compounds, which can jointly transform saturated light sulphur-containing compounds into heavier compounds by reaction with the unsaturated compounds contained in gasoline, said process employing a catalyst containing at least one metal from group VIB and at least one non-noble metal from group VIII deposited on a support comprising a metal aluminate of the $MAl_2O_4$ type in which the metal M is selected from the group constituted by nickel and cobalt and such that the quantity of metal M which interacts strongly with the support is in the range 0.5% to 10% by weight of oxide equivalent, and in which:

- the amount, by weight of oxide, of the group VIB element is strictly greater than 12% by weight with respect to the total catalyst weight;
- the amount, by weight of oxide, of the group VIII element is less than 15% by weight with respect to the total catalyst weight;
- the degree of sulphurization of the constituent metals of said catalyst is at least 60%;
- the volume of pores with a diameter of more than 0.05 microns is in the range 10% to 40% of the total pore volume;
- the mole ratio between the non-noble group VIII metal and the group VIB metal is in the range 0.2 to 0.5 mol/mol.

**2.** A process according to claim 1, in which the catalyst comprises a metal from group VIB selected from molybdenum and tungsten.

**3.** A process according to claim 2, in which the group VIB metal is molybdenum.

**4.** A process according to claim 1, in which the catalyst comprises a non-noble metal from group VIII selected from nickel, cobalt and iron.

**5.** A process according to claim 4, in which the non-noble group VIII metal is nickel.

**6.** A process according to one of the preceding claims, in which the catalyst comprises an amount of the oxide of the group VIII element in the range 1% to 10% by weight with respect to the catalyst weight.

7. A process according to claim 1, in which the degree of sulphurization of the constituent metals of said catalyst is more than 80%.

8. A process according to one of the preceding claims, in which the mole ratio between the non-noble group VIII metal and the group VIB metal is in the range 0.25 to 0.45.

9. A process according to one of the preceding claims, in which the catalyst has a total pore volume in the range 0.3 $cm^3/g$ to 0.7 $cm^3/g$.

10. A process according to one of the preceding claims, in which the volume of pores of the catalyst with a diameter of more than 0.1 microns is in the range 5% to 35% of the total pore volume.

11. A process according to one of the preceding claims, in which the volume of pores of the catalyst with a diameter of more than 0.05 micron represents 15% to 35% of the total pore volume.

12. A process according to one of the preceding claims, in which the support comprises an aluminate of a type $MAl_2O_4$ metal in which M is nickel.

13. A process according to claim 12, in which the quantity of metal M which interacts strongly with the support is in the range 1% to 5% of the oxide equivalent weight.

14. A process according to claim 12 or claim 13, in which a maximum of 40% of the quantity of metal used in the step for synthesizing the support is in weak interaction with said support.

15. A process according to claim 14, in which a maximum of 30% of the quantity of metal used in the step for synthesizing the support is in weak interaction with said support.

16. A process according to claim 14 or claim 15, in which a maximum of 25% of the quantity of metal M used in the step for synthesizing the support is in weak interaction with said support.

17. A process according to one of the preceding claims, in which the catalyst contains a nickel oxide content in the range 1% to 10% by weight with respect to the total catalyst weight, a molybdenum oxide content of more than 12% by weight with respect to the total catalyst weight and a nickel/molybdenum mole ratio in the range 0.25 to 0.45, the metals being deposited on a support comprising a nickel aluminate so that the quantity of metal M in strong interaction with the support is in the range 1% to 5% by weight of the metal oxide with respect to the total catalyst weight, the degree of sulphurization of the metals constituting the catalyst being more than 80% and the volume of pores of said catalyst with a diameter of more than 0.05 microns being in the range 15% to 35%.

18. A selective hydrogenation process according to one of the preceding claims, in which the feed is brought into contact with the catalyst at a temperature in the range 80°C to 220°C with a liquid hourly space velocity in the range 1 $h^{-1}$ to 10 $h^{-1}$ and at a pressure in the range 0.5 to 5 MPa.

Figure 1

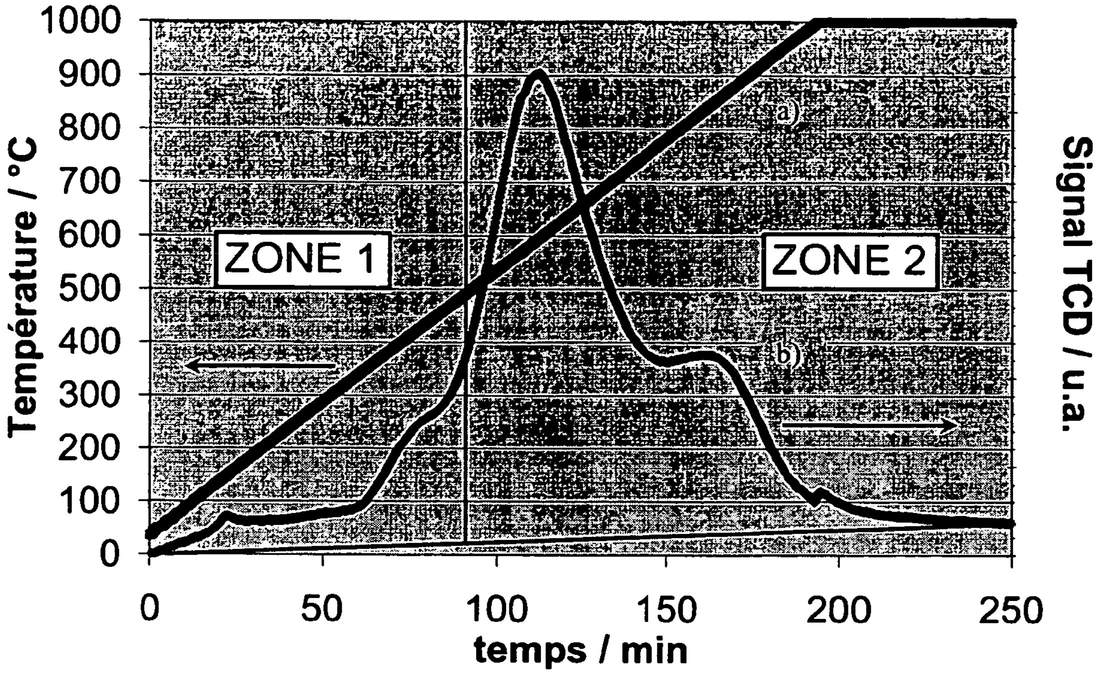


Figure 2

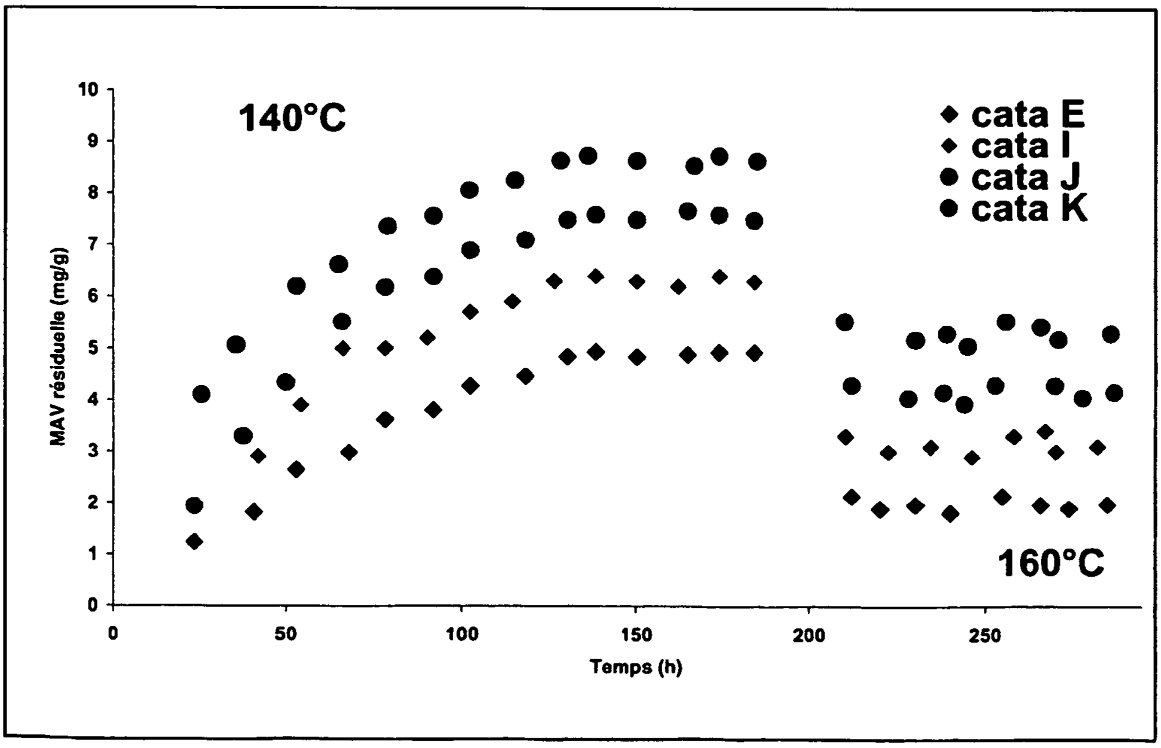

Figure 3

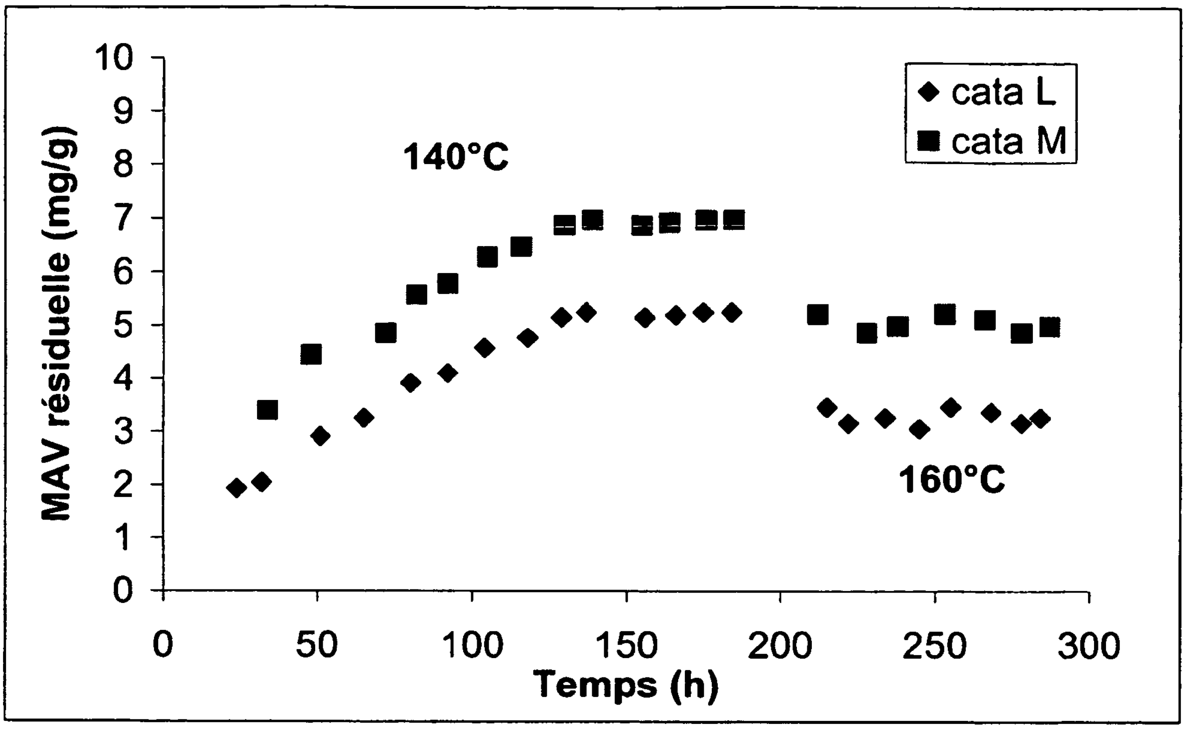
10
9
8
7
6
5
4
3
2
1
0
MAV résiduelle (mg/g)
0
50
100
150
200
250
300
Temps (h)
140°C
160°C
cata L
cata M

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

### Documents brevets cités dans la description


- EP 01077247 A1
- EP 0685552 A1
- EP 0623387 A1
- US 6469223 B
- US 3472763 A
- US 5807477 A
- US 5851383 A
- GB 1415417 A


### Littérature non-brevet citée dans la description


- Handbook of Chemistry and Physics. 1995